# EUROPÄISCHE PATENTSCHRIFT

(11) **EP 2 451 655 B1**
(45) Veröffentlichungstag und Bekanntmachung des Hinweises auf die Patenterteilung: **04.09.2013**
(21) Anmeldenummer: 10725214.0
(22) Anmeldetag: 28.06.2010
(51) Int. Cl.: B44C 5/04, E04C 2/24, B32B 37/26, B32B 37/10, B32B 21/06, B32B 21/02

(54) **SCHICHTSTOFFVERBUNDPLATTE UND VERFAHREN ZUR HERSTELLUNG**
COMPOSITE BOARD AND METHOD FOR PRODUCING
PANNEAU COMPOSITE STRATIFIÉ ET PROCÉDÉ DE PRODUCTION

(30) Priorität: 07.07.2009 DE 102009032153
(43) Veröffentlichungstag der Anmeldung: 16.05.2012
(73) Patentinhaber: Fritz Egger GmbH & Co. OG, 3105 Unterradlberg (AT)
(72) Erfinder: ARTHOLD, Andreas, 6382 Kirchdorf in Tirol (AT)
(74) Vertreter: Cohausz & Florack
(86) Internationale Anmeldenummer: PCT/EP2010/059127
(87) Internationale Veröffentlichungsnummer: WO 2011/003763

(56) Entgegenhaltungen:
- EP-A1- 1 493 878
- WO-A1-2004/050280
- AT-B- 408 733
- DE-A1-102008 027 235
- US-A- 3 493 451
- US-A- 4 006 048
- US-A1- 2009 155 612

## Beschreibung

Die Erfindung betrifft Verfahren zur Herstellung einer Schichtstoffverbundplatte sowie danach hergestellte Verbundplatten.

Aus dem Stand der Technik sind für den Inneneinrichtungsbereich einschließlich des Bereichs der Möbelherstellung verschiedene Platten auf Holzwerkstoffbasis bekannt. Beispielhaft seien hier Spanplatten, Faserplatten (insbesondere LDF-, MDF- und HDF-Platten), sowie OSB-Platten (Oriented-Strand-Board) genannt. Die Anforderungen für herkömmliche Spanplatten regelt die Norm EN 312. Danach haben "Platten für Inneneinrichtungen (einschließlich Möbel zur Verwendung im Trockenbereich - Typ P2)" im Dickenbereich von 13 bis 20 mm eine Biegefestigkeit von 13 N/mm² (gemessen nach der Norm EN 310) aufzuweisen. Darüber hinaus ist laut dieser Norm ein Biegeelastizitätsmodul in Querrichtung, also quer zur Plattenebene, von 1600 N/mm² einzuhalten.

Ferner sind aus dem Stand der Technik Schichtstoffplatten bekannt. Diese Platten bestehen aus einer Mehrzahl von mit Phenolharz getränkten Lagen von Kernpapieren, auf deren zumindest einer Seite ein mit Melaminharz imprägniertes Dekorpapier vorgesehen ist, wobei die so geschichteten Lagen unter erhöhtem Druck und erhöhter Temperatur zu einer kompakten Platte verpresst sind. Zur Erhöhung der Verschleißfestigkeit kann auf dem Dekorpapier noch eine transparente Papierlage, das sogenannte Overlaypapier, vorgesehen sein. Dieses kann bei erhöhten Anforderungen hinsichtlich Abriebbeständigkeit und/oder Kratzbeständigkeit auch mit Hartpartikeln, beispielsweise aus Korund, ausgerüstet sein.

Der Einsatzbereich von Schichtstoffplatten ist sehr vielfältig. So werden diese als sogenannte Schichtstoffe heute verbreitet im Möbelbau als Beschichtung von höher beanspruchten Dekorflächen wie Arbeitsflächen oder Kanten eingesetzt, wobei in diesem Fall die Dicke der Schichtstoffe unter 2 mm liegt. Ferner werden die Platten als sogenannte Compactplatten als selbsttragende Tischplatten, Zwischenwände oder Wandverkleidungen sowie im Außenbereich beispielsweise zur Verkleidung von Fassaden eingesetzt, wobei deren Dicke in diesen Fällen üblicherweise größer als 2 mm ist.

Zur Herstellung von Schichtstoffplatten der beschriebenen Art werden üblicherweise mit Phenolharz imprägnierte Kraftpapiere zur Bildung eines Kerns und mit Melaminharz imprägnierte Dekorpapiere zur Bildung einer dekorativen Oberfläche beschichtet und unter erhöhter Temperatur miteinander verpresst. Die dabei angewandten Temperaturen bewegen sich in der Regel im Bereich von 130°C, bei spezifischen Pressdrücken von 8 bis 10 MPa. In der Regel werden bei der Herstellung von Schichtstoffplatten Rückkühlpressen eingesetzt, die vor dem Öffnen der Presse die Platten abkühlen, um den aufgrund der enthaltenen Restfeuchte bei hohen Temperaturen vorliegenden Dampfdruck zu verringern. Ein überhöhter Dampfdruck in der Platte würde im Moment des Öffnens der Presse sonst zum Platzen derselben führen.

Die so hergestellten Schichtstoffe können dann in einem nachfolgenden Schritt auf einen Untergrund, beispielsweise eine Holzwerkstoffplatte der zuvor beschriebenen Art, appliziert, insbesondere aufgeklebt werden. Die Herstellung solchermaßen aufgebauter Verbundplatten ist aber relativ aufwendig und zeitintensiv.

Das Dokument DE 10 2008027235 A1 offenbart eine Verbundplatte mit allen Merkmalen im Oberbegriff der unabhängigen Ansprüche 11 und 12 sowie alle dementsprechenden Verfahrensmerkmale, die jeweils in jedem der unabhängigen Ansprüche 1, 2 und 3 definiert sind.

Es ist daher die Aufgabe der vorliegenden Erfindung, ein Verfahren zur Herstellung einer Schichtstoffverbundplatte anzugeben, mit dem der Herstellungsaufwand reduziert werden kann. Aufgabe ist es auch, eine entsprechende Verbundplatte anzugeben.

Die zuvor hergeleitete und aufgezeigte Aufgabe wird gemäß einer ersten Lehre der Erfindung gelöst durch ein Verfahren zur Herstellung einer Schichtstoffverbundplatte, bei dem die folgenden Schritte durchgeführt werden:
- Bereitstellen einer Mehrzahl von mit einer Imprägnierung versehenen ersten Zellulosefaserbahnen,
- Bereitstellen einer Mehrzahl von mit einer Imprägnierung versehenen zweiten Zellulosefaserbahnen,
- Bereitstellen einer Holzwerkstoffplatte,
- Bilden einer Schichtung mit einer oberen Decklage enthaltend die ersten Zellulosefaserbahnen, mit einer an die obere Decklage mit ihrer Oberseite angrenzenden Mittellage enthaltend die Holzwerkstoffplatte und mit einer an die Unterseite der Mittelage angrenzenden unteren Decklage enthaltend die zweiten Zellulosefaserbahnen, wobei die obere Decklage und/oder die untere Decklage so gebildet wird, dass sie nach dem Schritt des Ausfahrens aus der Heißpresse eine Dicke von mindestens 2 mm aufweist,
- Einfahren der Schichtung in eine Heißpresse,
- Verpressung der Schichtung unter Erhöhen des Pressdrucks und der Temperatur zu einer Verbundplatte und
- Ausfahren der Verbundplatte aus der Heißpresse.

Die zuvor hergeleitete und aufgezeigte Aufgabe wird gemäß einer zweiten Lehre der Erfindung gelöst durch ein Verfahren zur Herstellung einer Schichtstoffverbundplatte, insbesondere durch ein wie zuvor beschriebenes Verfahren, bei dem die folgenden Schritte durchgeführt werden:
- Bereitstellen einer Mehrzahl von mit einer Imprägnierung versehenen ersten Zellulosefaserbahnen,
- Bereitstellen einer Mehrzahl von mit einer Imprägnierung versehenen zweiten Zellulosefaserbahnen,
- Bereitstellen einer Holzwerkstoffplatte,
- Bilden einer Schichtung mit einer oberen Decklage enthaltend die ersten Zellulosefaserbahnen, mit einer an die obere Decklage mit ihrer Oberseite angrenzenden Mittellage enthaltend die Holzwerkstoffplatte und mit einer an die Unterseite der Mittelage angrenzenden unteren Decklage enthaltend die zweiten Zellulosefaserbahnen, wobei die Dicke der Holzwerkstoffplatte so gewählt wird, dass sie nach dem Schritt des Ausfahrens aus der Heißpresse eine Dicke hat, die höchsten um den Faktor 5 größer als die Dicke der oberen Decklage oder der unteren Decklage ist,
- Einfahren der Schichtung in eine Heißpresse,
- Verpressung der Schichtung unter Erhöhen des Pressdrucks und der Temperatur zu einer Verbundplatte und
- Ausfahren der Verbundplatte aus der Heißpresse.

Die zuvor hergeleitete und aufgezeigte Aufgabe wird gemäß einer dritten Lehre der Erfindung gelöst durch ein Verfahren zur Herstellung einer Schichtstoffverbundplatte, insbesondere durch ein wie zuvor beschriebenes Verfahren, bei dem die folgenden Schritte durchgeführt werden:
- Bereitstellen einer Mehrzahl von mit einer Imprägnierung versehenen ersten Zellulosefaserbahnen,
- Bereitstellen einer Mehrzahl von mit einer Imprägnierung versehenen zweiten Zellulosefaserbahnen,
- Bereitstellen einer Holzwerkstoffplatte,
- Bilden einer Schichtung mit einer oberen Decklage enthaltend die ersten Zellulosefaserbahnen, mit einer an die obere Decklage mit ihrer Oberseite angrenzenden Mittellage enthaltend die Holzwerkstoffplatte und mit einer an die Unterseite der Mittelage angrenzenden unteren Decklage enthaltend die zweiten Zellulosefaserbahnen, wobei die obere Decklage und/oder untere Decklage so gebildet wird, dass die Anzahl an Zellulosefaserbahnen jeweils mindestens 12 in der jeweiligen Decklage beträgt,
- Einfahren der Schichtung in eine Heißpresse,
- Verpressung der Schichtung unter Erhöhen des Pressdrucks und der Temperatur zu einer Verbundplatte und
- Ausfahren der Verbundplatte aus der Heißpresse.

Erfindungsgemäß wird also eine Schichtstoffverbundplatte, das heißt eine Verbundplatte, die auch eine Schichtstoffplatte aufweist, hergestellt, indem die in der späteren Verbundplatte enthaltenen Einzellagen zunächst in vereinzelter Form bereitgestellt und übereinander geschichtet werden, wobei eine Holzwerkstoffplatte als Trägerplatte bzw. als Mittellage in den Schichtaufbau bereits integriert wird, und indem anschließend diese aus einer Vielzahl von losen Einzellagen gebildete Schichtung mit der integrierten Holzwerkstoffplatte in einem einzigen Pressvorgang zu einer Verbundplatte verpresst wird. Mit anderen Worten wird nicht erst eine erste Schichtstoffplatte und eine zweite Schichtstoffplatte hergestellt, die dann mit einer Holzwerkstoffplatte unter vorherigem Applizieren eines Klebemittels verbunden werden, sondern das Rohmaterial (die einzelnen Zellulosefaserbahnen und die Holzwerkstoffplatte) werden nur einem einzigen Pressvorgang ausgesetzt. Es entfällt also der Zeitaufwand für das Verpressen einer ersten Schichtstoffplatte, der Zeitaufwand für das Verpressen einer zweiten Schichtstoffplatte und der Zeitaufwand für das Applizieren eines Klebemittels. Auch reduzieren sich die Herstellungskosten aufgrund des Verzichts auf ein separates Klebemittel.

Solchermaßen hergestellte Verbundplatten weisen auch eine besonders stabile Verbindung zwischen der die Zellulosefaserbahnen aufweisenden jeweiligen Decklage und der Holzpartikel aufweisenden Mittellage auf. In Verbindung mit dem Merkmal, wonach die Decklagen eine Dicke von mindestens 2 mm haben, und/oder dem Merkmal, wonach die Dicke der Holzwerkstoffplatte höchstens um den Faktor 5 größer als die Dicke der oberen Decklage oder der unteren Decklage ist, und/oder dem Merkmal, wonach die obere Decklage und/oder untere Decklage eine Anzahl an Zellulosefaserbahnen von jeweils mindestens 12 aufweist, lassen sich Platten mit hohen mechanisch-technologischen Eigenschaften erzeugen, die beispielsweise als Fächer bzw. Böden von Schwerlastregalen, als Schalungsplatten für den Hochbau, als Lkw-Böden oder als tragende Deckenelemente für den Holzbau eingesetzt werden können, wobei in letzterem Fall auch eine Minimierung des Deckenaufbaus und eine hohe Feuchtebeständigkeit erreicht wird.

Gemäß einer Ausgestaltung des erfindungsgemäßen Verfahrens wird im Schritt des Bildens einer Schichtung die obere Decklage und/oder die untere Decklage an ihrer von der Mittellage abgewandten Seite mit einer ein Dekorpapier bildenden Zellulosefaserbahn versehen. Mit anderen Worten kann durch das erfindungsgemäße Verfahren ein Dekorpapier bereits von vorne herein in der Schichtung vorgesehen werden, was den Herstellungsaufwand weiter verringert.

Zusätzlich oder alternativ kann im Schritt des Bildens einer Schichtung an der von der Mittellage abgewandten Seite der oberen Decklage und/oder der unteren Decklage auch eine Verschleißschutzschicht vorgesehen werden, die insbesondere Hartpartikel wie Korund aufweist, und vorzugsweise eine ein Overlaypapier bildende Zellulosefaserbahn ist.

Gemäß einer weiteren Ausgestaltung des erfindungsgemäßen Verfahrens wird die Holzwerkstoffplatte als vorgefertigte Span-, Faser- oder OSB-Platte bereitgestellt. Diese Platten weisen bereits allein schon eine relativ hohe Stabilität, insbesondere hinsichtlich Biegefestigkeit und Biegeelastizitätsmodul, auf und haben auch den Vorteil, dass, beispielsweise bei der Herstellung von Möbeln, bei der zwei solche Verbundplatten über Eck miteinander verschraubt werden, die Mittellage ohne weiteres einfache Schrauben, wie sie im Möbelbau verwendet werden, stirnseitig aufnehmen und halten kann. Eine solche Mittellage ist also einerseits zur Verankerung von Standardschrauben im Möbelbereich geeignet und hat außerdem den Vorteil, dass bei einer solchen Übereckanordnung zum stirnseitigen Einbringen einer Schraube in die Verbundplatte, da die Mittellage aus einem Holzwerkstoff besteht, im Gegensatz zu einer herkömmlichen Schichtstoff- bzw. Compactplatte nicht vorgebohrt werden muss. Die erfindungsgemäß hergestellten Schichtstoffverbundplatten führen also auch bei der Möbelherstellung aufgrund ihres Aufbaus und insbesondere des Integrierens einer Holzwerkstoffplatte in den Aufbau zu einer Arbeitserleichterung und zu einem Zeitgewinn bei der Möbelherstellung.

Gemäß wiederum einer weiteren Ausgestaltung ist vorgesehen, dass die Verbundplatte nach dem Schritt des Ausfahrens aus der Heißpresse beschichtet wird, wobei der Schritt des Beschichtens vorzugsweise ein Lackieren, ein Bedrucken, ein Pulverbeschichten, ein Applizieren von einem Dekormaterial, insbesondere einem Holz- oder Steinfurnier, einer Dekor- oder Metallfolie oder einem Schichtstoff, und/oder ein Verpressen mit einem imprägnierten, insbesondere mit Melaminharz imprägnierten, Dekorpapier umfasst. Vergleichsweise sehr gute Voraussetzungen stehen hinsichtlich der Applikation von Motiven durch digitale Druckverfahren zur Verfügung.

Die obere Decklage und/oder die untere Decklage wird gemäß noch einer weiteren Ausgestaltung des erfindungsgemäßen Verfahrens so gebildet, dass sie nach dem Schritt des Ausfahrens aus der Heißpresse eine Dicke von bevorzugt mindestens 3 mm, besonders bevorzugt mindestens 4 mm, aufweist. Solche Platten weisen eine noch höhere Stabilität auf, wobei gleichzeitig auch trotzdem noch eine gute Verbindung zwischen den beiden Decklagen und der Mittellage besteht.

Ebenfalls aus Stabilitätsgründen kann die Dicke der Holzwerkstoffplatte ferner so gewählt werden, dass sie nach dem Schritt des Ausfahrens aus der Heißpresse eine Dicke hat, die bevorzugt höchstens um den Faktor 4, besonders bevorzugt höchstens um den Faktor 3, größer als die Dicke der oberen Decklage und/oder der unteren Decklage ist.

Schließlich kann ebenfalls zum Erreichen einer erhöhten Stabilität die obere und/oder untere Decklage so gebildet werden, dass die Anzahl an Zellulosefaserbahnen jeweils bevorzugt mindestens 18, besonders bevorzugt mindestens 24, in der jeweiligen Decklage beträgt.

Gemäß noch einer weiteren Ausgestaltung des erfindungsgemäßen Verfahrens wird die obere Decklage und die untere Decklage so gebildet, dass die Dicke der oberen Decklage nach dem Schritt des Ausfahrens aus der Heißpresse größer als die Dicke der unteren Decklage ist. Mit anderen Worten ist es durch das erfindungsgemäße Verfahren möglich, neben symmetrisch aufgebauten auch asymmetrisch aufgebaute Verbundplatten zu erzeugen, wobei auch bei den asymmetrisch aufgebauten Platten gewährleistet ist, dass aufgrund der relativ großen möglichen Dicken der Decklagen kaum noch nennenswerte Unterschiede im Schrumpf zu erwarten sind. Trotz eines asymmetrischen Aufbaus erhält solch eine Verbundplatte auch langfristig eine ebene Oberfläche bzw. weist ein gutes Stehvermögen auf, d.h. ein Verziehen der Platte ist ausgeschlossen.

Das Material der Zellulosefaserbahnen und der Holzwerkstoffplatte sowie der Pressdruck, die Temperatur der Heißpresse und die Temperatur der Verbundplatte in der Heißpresse werden gemäß noch einer weiteren Ausgestaltung des erfindungsgemäßen Verfahrens so aufeinander abgestimmt, dass die fertige Verbundplatte eine Biegefestigkeit in Querrichtung von mindestens 30 N/mm², bevorzugt mindestens 50 N/mm², besonders bevorzugt mindestens 80 N/mm², und/oder einen Biegeelastizitätsmodul in Querrichtung von mindestens 3000 N/mm², bevorzugt mindestens 5000 N/mm², besonders bevorzugt mindestens 7500 N/mm², erhält. Im Schritt des Verpressens kann die maximale Temperatur der Heißpresse mindestens 130°C, bevorzugt mindestens 140°C, besonders bevorzugt mindestens 150°C, betragen. Dies wirkt sich positiv auf die Stabilität der fertigen Verbundplatte aus und reduziert die Presszeit auf ein Minimum. Durch die erhöhten Presstemperaturen sind auch erhöhte Pressdrücke bevorzugt. So kann im Schritt des Verpressens der maximale Pressdruck mindestens 15 MPa, bevorzugt mindestens 19 MPa, besonders bevorzugt mindestens 23 MPa, betragen. Schließlich kann im Schritt des Verpressens die maximale Temperatur der Verbundplatte mindestens 120°C, bevorzugt mindestens 130°C, besonders bevorzugt mindestens 140°C, betragen. Platten, die auf diese Weise hergestellt worden sind, sind damit mechanisch sehr hoch beanspruchbar und können in vielen Fällen als Ersatz von herkömmlichen Kompaktplatten dienen.

Gemäß noch einer weiteren Ausgestaltung wird nach dem Schritt des Ausfahrens aus der Heißpresse in die Verbundplatte ein Kantenprofil, insbesondere Nut- und/oder Federprofil, eingebracht. Insbesondere wird ein solches Profil in die Holzwerkstoffplatte, also in den Bereich der aus einem Holzwerkstoff bestehenden Mittellage eingebracht. Das Material der Holzwerkstoffplatte ist dabei besonders dazu geeignet, auf einfache Weise auch relativ komplexe Profilformen einzubringen. Der Bereich der Decklagen, der von den Zellulosefaserbahnen gebildet wird, kann, so dies im Kantenbereich, insbesondere bei Vorhandensein eines Profils in der Holzwerkstoffplatte notwendig ist, mit einem in Plattenquerrichtung ebenen Schnitt abgeschnitten werden, damit das Profil in der Holzwerkstoffplatte mit einem entsprechenden Profil in einer benachbarten Platte optimal zusammenwirken kann. Auf diese Weise lassen sich dann auch mehrere der erfindungsgemäß hergestellten Verbundplatten zu einem flächigen Verbund verlegen. Für den Fall, dass wie zuvor beschrieben zumindest eine Decklage gegenüber der Mittellage zurückgesetzt sein soll, damit beispielsweise ein komplexes Profil in der Mittellage optimal mit einem Profil einer anderen Platte zusammenwirken kann, kann auch schon beim Bilden des Schichtaufbaus die entsprechende Decklage mit einem Versatz zur daneben angeordneten Holzwerkstoffplatte geschichtet bzw. angeordnet werden.

Gemäß noch einer weiteren Ausgestaltung des erfindungsgemäßen Verfahrens wird nach dem Schritt des Ausfahrens aus der Heißpresse und/oder während des Verpressens der Schichtung eine Struktur in die Oberfläche der oberen Decklage und/oder der unteren Decklage eingebracht. So ist vorstellbar, bei Schalungsplatten eine Holzstruktur einzuprägen oder auch nachträglich noch einzufräsen und/oder einzulasern, um bei Herstellung von Sichtbeton eine gefällige Oberfläche zu erreichen. Grundsätzlich können auch andere Strukturen durch Einprägen, Einfräsen und/oder Einlasern erstellt werden. Für Lkw-Böden kann auch mit einfachen Mitteln eine Siebstruktur eingebracht werden, um die erforderliche Rutschfestigkeit zu erreichen.

Um den Herstellungsprozess weiter zu vereinfachen, kann ferner vorgesehen sein, dass die Zellulosefaserbahnen der Schichtung alle mit derselben Imprägnierung versehen werden. Zusätzlich oder alternativ kann auch vorgesehen sein, dass die Zellulosefaserbahnen der Schichtung alle mit einem Phenolharz als Imprägnierung versehen werden. Die Imprägnierung einer oder mehrerer der Zellulosefaserbahnen kann auch elektrisch leitfähige Additive, insbesondere Salze organischer Säuren, vorzugsweise Metallsalze, enthalten. Mit dem erfindungsgemäßen Herstellungsverfahren können Verbundplatten also auf einfache Weise und mit geringem Aufwand an eine Vielzahl unterschiedlicher Anforderungen angepasst werden.

Gemäß noch einer weiteren Ausgestaltung wird zwischen dem Schritt des Ausfahrens der Verbundplatte aus der Heißplatte und dem Schritt des Beschichtens der Verbundplatte ein Schritt des Vorbehandelns der Verbundplatte durchgeführt. Dies kann in einem Schleifen, Glätten, insbesondere Thermoglätten, der Verbundplatten und/oder in einem Applizieren von Vorstrichen, Primern und/oder Grundierungen auf die Verbundplatte und/oder in einer Plasmabehandlung der Oberfläche der Verbundplatte bestehen.

Ein Vorteil einer Vorbehandlung liegt in der Möglichkeit, die Verbundplatte vor dem Beschichten zu schleifen, womit sich wesentlich geringere Dickentoleranzen, als bei herkömmlichen Schichtpressstoffen, ergeben. Darüber hinaus ist dieser Umstand vor allem auch deswegen äußerst vorteilhaft, weil so auf teure Pressbleche verzichtet werden kann. Für eine Laminatoberfläche sind nur hochwertigste, wartungsintensive Pressbleche, die wiederkehrend gereinigt und von Zeit zu Zeit auch aufgearbeitet, sprich neu verchromt werden müssen, einsetzbar, um eine geschlossene Oberfläche mit dem gewünschten Glanzgrad und der gewünschten Struktur zu erzielen. Auf diese hochwertigen und Wartungsintensiven Pressbleche kann durch das erfindungsgemäße Verfahren und die Beschichtung in einem nachfolgenden Schritt verzichtet werden.

Eine zusätzliche, wirkungsvolle Maßnahme zur Verringerung der Presszeit ergibt sich aus der Möglichkeit, eine poröse, wasserdampfdurchlässige Schicht an einer oder beiden Seiten der Schichtung, also zwischen Grundkörper und Pressblechen, vorzusehen. Die sich damit ergebende Oberflächenrauhigkeit des fertigen Grundkörpers kann im Wege des nachfolgenden Schleifens sehr leicht wieder abgetragen werden. Durch die zusätzliche Schicht, beispielsweise ein Vlies oder eine Folie, insbesondere aus Kunststoff, kann der aus der Restfeuchtigkeit der imprägnierten Zellulosefaserbahnen entstehende Wasserdampf während des Pressens verbessert über die Oberflächen der Schichtung austreten. Es wird damit der innere Dampfdruck im entstehenden Schichtpressstoff reduziert, womit das beschriebene Platzen der Platte beim Verlassen der Presse vermieden werden kann. Eine wesentliche Reduktion der Presszeit ist damit erreichbar. Es ist bevorzugt, die poröse, wasserdampfdurchlässige Schicht beidseitig vorzusehen, da sonst, besonders bei größeren Plattendicken, asymmetrische Verhältnisse vorliegen, was zum Verziehen der fertigen Platten führen kann. Weiterer Vorteil der wiederholt einsetzbaren porösen, wasserdampfdurchlässigen Schicht ist weiters, dass diese auch wie eine Trennfolie wirkt und damit stets ein leichtes Ablösen des Pressgutes - beim Pressenaustritt bzw. Öffnen der Presse bewirkt. Auch wird eine mögliche Verschmutzung der Pressbleche vermieden.

Das Verfahren kann sowohl mit Hilfe von Taktpressen als auch mit kontinuierlich arbeitenden Pressen durchgeführt werden.

Es ist bekannt, zur Herstellung von Schichtstoffplatten taktweise arbeitende Mehretagenpressen einzusetzen. Bei diesen werden immer eine Mehrzahl von Schichtungen mit dazwischen liegenden Pressblechen in einem Presstakt verpresst. Übliche Presszeiten liegen hier im Bereich von 100 Minuten. Aufwändig ist dabei aber neben der sehr hohen Presszeit auch das Aufstapeln der verschiedenen Schichtungen und die Bereitstellung einer Mehrzahl von Pressblechen. Der Einsatz von Taktpressen ist nach dem Stand der Technik die einzige Möglichkeit, höhere Plattendicken zu erzielen. Kontinuierliche Pressverfahren, hier in der Regel isobare Doppelbandpressen, sind aufgrund der damit zur Verfügung stehenden, verhältnismäßig geringen Presszeit, auf Plattendicken von maximal 1,2 mm beschränkt.

Nach dem erfindungsgemäßen Verfahren, das erhöhte Presstemperaturen zulässt, verringern sich die Presszeiten allerdings, sodass die Herstellung einer erfindungsgemäßen Verbundplatte mit einer Dicke der Decklagen von jeweils mindestens 2 mm im kontinuierlichen Pressverfahren ermöglicht wird. Durch die nachträgliche Möglichkeit der separaten Oberflächenbehandlung ist es nach dem erfindungsgemäßen Verfahren zwar nicht erforderlich, eine isobare Doppelbandpresse einzusetzen, was bei der herkömmlichen Schichtstoffherstellung schon der Fall ist, um eine hochwertige, geschlossene Laminatoberfläche zu erzielen. Lokale Unterschiede im Pressdruck, wie sie im Unterschied zu isochoren Pressen bei isobaren Pressen eben nicht auftreten, würden zu ungewünschter Schleierbildung und unregelmäßigem Glanzgrad führen. Da aber nach einer Ausgestaltung der Erfindung die Beschichtung in einem separaten Schritt erfolgt und zudem noch eine spezifische Vorbehandlung wie Schleifen möglich ist, kann erstmals eine isochore Doppelbandpresse zur Herstellung von Schichtstoffverbundplatten eingesetzt werden. Diese ermöglicht eine vielfache Pressenlänge, womit die erforderliche Presszeit auch bei Plattendicken von über 5, 12 oder sogar 18 mm gewährleistet werden kann.

Ein zusätzlicher Vorteil beim Einsatz einer isochoren Doppelbandpresse mit einer Länge von zumindest 10 m, bevorzugt über 20 m, besonders bevorzugt über 25 m, liegt in der variablen Temperaturführung. So ist es bei diesem Pressentyp möglich, in unterschiedlichen Zonen unterschiedliche Presstemperaturen vorzusehen. Wird nun am Beginn der Presse die Schichtung mit einer hohen Temperatur beaufschlagt, die dann gegen Ende der Presse reduziert wird, ergibt sich schon ein gewisser Rückkühleffekt, der den inneren Dampfdruck in der herzustellenden Platte reduziert und so wiederum die Gefahr der Plattenplatzer, dem bestimmenden Kriterium für die Presszeit, reduziert. Es ergibt sich damit eine weitere Möglichkeit, die erforderliche Presszeit zur Herstellung einer Verbundplatte zu reduzieren.

Durch den Umstand, dass nach dem erfindungsgemäßen Verfahren erstmals Schichtstoffverbundplatten durch kontinuierlich arbeitende Doppelbandpressen hergestellt werden können, sind diese erstmalig in theoretisch unendlicher Länge verfügbar. Durch die wahlweise Ablängung des hergestellten Plattenstranges nach der Doppelbandpresse können erstmalig Platten mit einer Dicke der Decklagen von jeweils mindestens 2 mm und mehr in beinahe beliebiger Länge hergestellt werden. Eine Beschränkung ergibt sich lediglich durch die örtlichen Platzverhältnisse bzw. die gegebenen Transportmöglichkeiten. Verbundplatten mit einer Länge über 5 m, bevorzugt über 8 m, besonders bevorzugt mit über 10 m Länge, lassen sich erstmalig herstellen.

Durch die einfache Möglichkeit, die Platten auf die genannten Maße abzulängen, sind aber auch Zuschnitte mit vergleichsweise wesentlich verringertem Verschnitt möglich, da die nach der Presse abgelängten großformatigen Platten bereits in Hinblick auf das fertige Zuschnittmaß einer später zuzuschneidenden Platte gewählt werden können. Es ergibt sich damit eine hervorragende Formatflexibilität. Bei Taktpressen liegt diese nicht vor, da hier durch die fixe Größe der Pressenflächen das herstellbare Plattenmaß vorgegeben ist.

Die Aufgabe wird ferner gelöst durch Verbundplatten, die durch ein Verfahren, wie es zuvor beschrieben wurde, hergestellt sind.

Entsprechend wird die Aufgabe auch bei einer Verbundplatte mit den Merkmalen der Ansprüche 11 und 12 gelöst.

Vorteilhafte Ausgestaltungen sind Gegenstand der Unteransprüche und ergeben sich aus dem zuvor beschriebenen Verfahren.

Es gibt nun eine Vielzahl von Möglichkeiten, die erfindungsgemäßen Verfahren und die erfindungsgemäßen Verbundplatten auszugestalten und weiterzubilden. Hierzu sei einerseits verwiesen auf die den unabhängigen Patentansprüchen nachgeordneten abhängigen Patentansprüche, andererseits auf die Beschreibung von Ausführungsbeispielen in Verbindung mit der Zeichnung. In der Zeichnung zeigt:
- Fig. 1: eine Schichtung einer Verbundplatte gemäß der vorliegenden Erfindung und
- Fig. 2: eine schematische Darstellung der Herstellung einer solchen Verbundplatte.

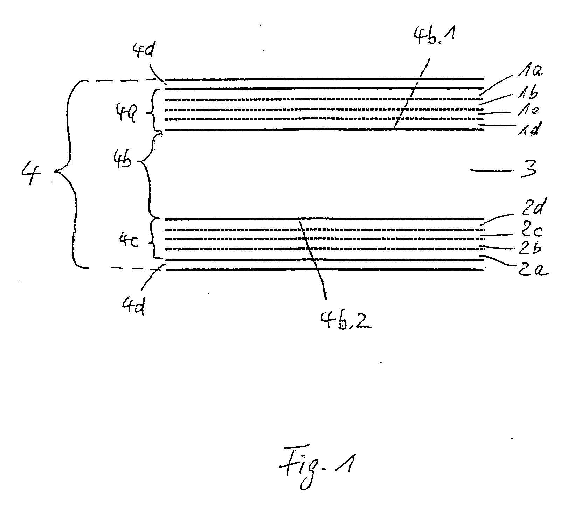

In Fig. 1 ist der Aufbau einer Schichtstoffverbundplatte dargestellt, wie sie gemäß einem Ausführungsbeispiel der erfindungsgemäßen Verfahren erhalten werden kann.

Die dargestellte Schichtung 4 ist unterteilt in eine obere Decklage 4a, eine an die obere Decklage 4a mit ihrer Oberseite 4b.1 angrenzende Mittellage 4b und eine an die Unterseite 4b.2 der Mittellage 4b angrenzende untere Decklage 4c.

Die Mittellage 4b ist hier von einer Holzwerkstoffplatte 3 in Form einer Spanplatte gebildet.

Die obere Decklage 4a und die untere Decklage 4c sind im vorliegenden Ausführungsbeispiel symmetrisch aufgebaut, obwohl auch ein asymmetrischer Aufbau denkbar wäre. Die obere Decklage 4a weist eine Mehrzahl von mit einer Imprägnierung versehenen ersten Zellulosefaserbahnen 1a-1d und die untere Decklage 4c eine Mehrzahl von mit einer Imprägnierung versehenen zweiten Zellulosefaserbahnen 2a-2d auf. Zwar sind hier aus Gründen der Übersichtlichkeit nur vier Bahnen je Decklage schematisch dargestellt, die genaue Anzahl liegt in diesem Ausführungsbeispiel allerdings bei 12 Bahnen zuzüglich einem Dekorpapier. Bei der Imprägnierung handelt es sich bei sämtlichen Zellulosefaserbahnen um ein Phenolharz.

Die obere Decklage 4a und die untere Decklage 4c sind dabei an ihrer von der Mittellage 4b abgewandten Seite mit einem Dekorpapier, welches von der jeweils äußeren Zellulosefaserbahn 1a der Decklage 4a bzw. 4c gebildet wird, versehen.

Ferner ist an der von der Mittellage 4b abgewandten Seite der oberen Decklage 4a und der unteren Decklage 4c eine Verschleißschutzschicht 4d mit integrierten Hartpartikeln in Form eines eine Zellulosefaserbahn bildenden Overlaypapiers vorgesehen.

In dem dargestellten Ausführungsbeispiel hat die obere Decklage 4a und die untere Decklage 4c jeweils eine Dicke von 4 mm und die Holzwerkstoffplatte 3, das heißt die Mittellage 4b, eine Dicke von 8 mm. Die Gesamtdicke einer Verbundplatte mit der Schichtung gemäß Fig. 1 beträgt damit etwa 16 mm.

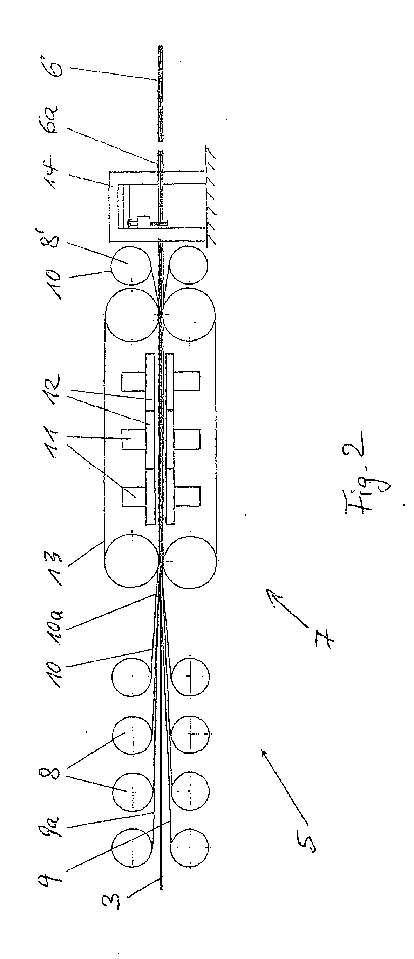

Fig. 2 zeigt schematisch die Herstellung einer Verbundplatte 6 mit dem zuvor anhand von Fig. 1 beschriebenen Aufbau.

Dazu ist hier als Heißpresse 5 eine kontinuierlich arbeitende, isochore Doppelbandpresse 7 vorgesehen. Zur Beschickung der Presse 7 sind von dieser mehrere Rollen 8 von bereits imprägniertem Kraftpapier 9 in Form einer Zellulosefaserbahn angeordnet, von denen die Bahnen 9a abgewickelt und der Presse 7 direkt zugeführt werden. Im vorliegenden Fall handelt es sich um mit Phenolharz imprägniertes Kraftpapier 9 mit einem Rohpapiergewicht von 150 g/m² und einem Beharzungsgrad von 67 %. Bei einer Restfeuchte von 7 % entspricht das einem Flächengewicht des imprägnierten Kraftpapiers 9 von 270 g/m². Die oberste und unterste Schicht wird durch eine poröse Lage 10 einer Kunststoffbahn 10a gebildet. Letztere wird nach der Presse 7 wieder von den Plattenoberflächen abgenommen und wieder auf eine Rolle 8' gewickelt, um wiederholt eingesetzt werden zu können. Um höhere Plattendicken zu erreichen, können, um die Anzahl von Abwickelstationen geringer zu halten, auf einer Rolle 8 mehrere Lagen imprägnierter Papierbahnen 9a aufgewickelt sein. Schließlich wird zwischen den Rollen 8 noch eine Holzwerkstoffplatte 3 in Form eines Endlosstrangs 6a zugeführt.

Die Presse 7 weist eine wirksame Länge von 22,5 m auf und kann abschnittweise mittels entsprechender Heizmittel 11 auf unterschiedliche Temperaturen aufgeheizt und auch jeweils mittels entsprechender Pressenabschnitte 12 mit unterschiedlichen Pressdrücken beaufschlagt werden. So ist im vorliegenden Fall der Pressdruck in dem ersten (vorderen) der Pressabschnitte 12 mit 20 MPa gewählt, der dann bis zur Mitte der Presse 7 auf etwa 17 MPa verringert und ab da gehalten wird. Im letzten Viertel der Pressenlänge wird dann nicht mehr der Pressdruck vorgegeben, sondern es wird distanzgesteuert geregelt, also der Abstand der Pressbänder 13 vorgegeben, um die gewünschte Plattendicke möglichst innerhalb kleinster Toleranzen zu erreichen.

Nach der Presse 7 ist eine Diagonalsäge 14 vorgesehen, die den endlosen Plattenstrang 6a auf die gewünschte Plattenlänge ablängt. Die einzelnen Platten 6 werden dann in einem nachgeordneten (nicht dargestellten) Kühlstern abgekühlt und können dann zwischengelagert werden oder auch direkt der weiteren Verarbeitung zugeführt werden.

## Patentansprüche

1. Verfahren zur Herstellung einer Schichtstoffverbundplatte, bei dem die folgenden Schritte durchgeführt werden:
- Bereitstellen einer Mehrzahl von mit einer Imprägnierung versehenen ersten Zellulosefaserbahnen (1a, 1b, 1c, 1d),
- Bereitstellen einer Mehrzahl von mit einer Imprägnierung versehenen zweiten Zellulosefaserbahnen (2a,2b,2c,2d),
- Bereitstellen einer Holzwerkstoffplatte (3),
- Bilden einer Schichtung (4) mit einer oberen Decklage (4a) enthaltend die ersten Zellulosefaserbahnen (1a,1b,1c,1d), mit einer an die obere Decklage (4a) mit ihrer Oberseite (4b.1) angrenzenden Mittellage (4b) enthaltend die Holzwerkstoffplatte (3) und mit einer an die Unterseite (4b.2) der Mittelage (4b) angrenzenden unteren Decklage (4c) enthaltend die zweiten Zellulosefaserbahnen (2a,2b,2c,2d), wobei die obere Decklage (4a) und/oder die untere Decklage (4c) so gebildet wird, dass sie nach dem Schritt des Ausfahrens aus der Heißpresse (5) eine Dicke von mindestens 2 mm aufweist,
- Einfahren der Schichtung (4) in eine Heißpresse (5),
- Verpressung der Schichtung (4) unter Erhöhen des Pressdrucks und der Temperatur zu einer Verbundplatte (6) und
- Ausfahren der Verbundplatte (6) aus der Heißpresse (5).

2. Verfahren zur Herstellung einer Schichtstoffverbundplatte, insbesondere nach Anspruch 1, bei dem die folgenden Schritte durchgeführt werden:
- Bereitstellen einer Mehrzahl von mit einer Imprägnierung versehenen ersten Zellulosefaserbahnen (1a,1b,1c,1d),
- Bereitstellen einer Mehrzahl von mit einer Imprägnierung versehenen zweiten Zellulosefaserbahnen (2a,2b,2c,2d),
- Bereitstellen einer Holzwerkstoffplatte (3),
- Bilden einer Schichtung (4) mit einer oberen Decklage (4a) enthaltend die ersten Zellulosefaserbahnen (1a,1b,1c,1d), mit einer an die obere Decklage (4a) mit ihrer Oberseite (4b.1) angrenzenden Mittellage (4b) enthaltend die Holzwerkstoffplatte (3) und mit einer an die Unterseite (4b.2) der Mittelage (4b) angrenzenden unteren Decklage (4c) enthaltend die zweiten Zellulosefaserbahnen (2a,2b,2c,2d), wobei die Dicke der Holzwerkstoffplatte (3) so gewählt wird, dass sie nach dem Schritt des Ausfahrens aus der Heißpresse (5) eine Dicke hat, die höchstens um den Faktor 5 größer als die Dicke der oberen Decklage (4a) oder der unteren Decklage (4c) ist,
- Einfahren der Schichtung (4) in eine Heißpresse (5),
- Verpressung der Schichtung (4) unter Erhöhen des Pressdrucks und der Temperatur zu einer Verbundplatte (6) und
- Ausfahren der Verbundplatte (6) aus der Heißpresse (5).

3. Verfahren zur Herstellung einer Schichtstoffverbundplatte, insbesondere nach Anspruch 1 oder 2, bei dem die folgenden Schritte durchgeführt werden:
- Bereitstellen einer Mehrzahl von mit einer Imprägnierung versehenen ersten Zellulosefaserbahnen (1a,1b,1c,1d),
- Bereitstellen einer Mehrzahl von mit einer Imprägnierung versehenen zweiten Zellulosefaserbahnen (2a,2b,2c,2d),
- Bereitstellen einer Holzwerkstoffplatte (3),
- Bilden einer Schichtung (4) mit einer oberen Decklage (4a) enthaltend die ersten Zellulosefaserbahnen (1a,1b,1c,1d), mit einer an die obere Decklage (4a) mit ihrer Oberseite (4b.1) angrenzenden Mittellage (4b) enthaltend die Holzwerkstoffplatte (3) und mit einer an die Unterseite (4b.2) der Mittelage (4b) angrenzenden unteren Decklage (4c) enthaltend die zweiten Zellulosefaserbahnen (2a,2b,2c,2d), wobei die obere Decklage (4a) und/oder untere Decklage (4c) so gebildet wird, dass die Anzahl an Zellulosefaserbahnen jeweils mindestens 12 in der jeweiligen Decklage beträgt,
- Einfahren der Schichtung (4) in eine Heißpresse (5),
- Verpressung der Schichtung (4) unter Erhöhen des Pressdrucks und der Temperatur zu einer Verbundplatte (6) und
- Ausfahren der Verbundplatte (6) aus der Heißpresse (5).

4. Verfahren nach einem der vorangehenden Ansprüche, **dadurch gekennzeichnet, dass** im Schritt des Bildens einer Schichtung (4) die obere Decklage (4a) und/oder die untere Decklage (4c) an ihrer von der Mittellage (4b) abgewandten Seite mit einer ein Dekorpapier bildenden Zellulosefaserbahn (1a) und/oder mit einer Verschleißschutzschicht (4d), die insbesondere Hartpartikel aufweist und vorzugweise eine ein Overlaypapier bildende Zellulosefaserbahn ist, versehen wird.

5. Verfahren nach einem der vorangehenden Ansprüche, **dadurch gekennzeichnet, dass** die obere Decklage (4a) und/oder die untere Decklage (4c) so gebildet wird, dass sie nach dem Schritt des Ausfahrens aus der Heißpresse (5) eine Dicke von mindestens 3 mm, bevorzugt mindestens 4 mm, aufweist und/oder dass die Anzahl an Zellulosefaserbahnen jeweils mindestens 18, bevorzugt mindestens 24, in der jeweiligen Decklage beträgt.

6. Verfahren nach einem der vorangehenden Ansprüche, **dadurch gekennzeichnet, dass** die Dicke der Holzwerkstoffplatte (3) so gewählt wird, dass sie nach dem Schritt des Ausfahrens aus der Heißpresse (5) eine Dicke hat, die höchstens um den Faktor 4, bevorzugt höchstens um den Faktor 3, größer als die Dicke der oberen Decklage (4a) oder der unteren Decklage (4c) ist.

7. Verfahren nach einem der vorangehenden Ansprüche, **dadurch gekennzeichnet, dass** im Schritt des Verpressens die maximale Temperatur der Heißpresse (5) mindestens 130°C, bevorzugt mindestens 140°C, besonders bevorzugt mindestens 150°C, und/oder die maximale Temperatur der Verbundplatte (6) mindestens 120°C, bevorzugt mindestens 130°C, besonders bevorzugt mindestens 140°C, und/oder der maximale Pressdruck mindestens 15 MPa, bevorzugt mindestens 19 MPa, besonders bevorzugt mindestens 23 MPa, beträgt.

8. Verfahren nach einem der vorangehenden Ansprüche, **dadurch gekennzeichnet, dass** eine oder mehrere der Zellulosefaserbahnen (1a,1b,1c,1d,2a,2b,2c,2d) mit einer Imprägnierung versehen werden, die elektrisch leitfähige Additive, insbesondere Salze organischer Säuren, vorzugsweise Metallsalze, enthält.

9. Verfahren nach einem der vorangehenden Ansprüche, **dadurch gekennzeichnet, dass** vor dem Schritt des Verpressens eine wasserdampfdurchlässige Schicht, insbesondere ein Vlies oder eine Folie, benachbart zu einer oder beiden Seiten der Schichtung (4) vorgesehen wird, die nach dem Schritt des Verpressens von der Verbundplatte (6) entfernt wird.

10. Verfahren nach einem der vorangehenden Ansprüche, **dadurch gekennzeichnet, dass** die Heißpresse (5) eine kontinuierlich arbeitende Presse, insbesondere Doppelbandpresse, ist, die insbesondere eine Pressenlänge von mindestens 10 m, bevorzugt mindestens 20 m, besonders bevorzugt mindestens 25 m, aufweist, und/oder die aus der Heißpresse (5) ausfahrende Verbundplatte (6) ein kontinuierlicher Plattenstrang ist, aus dem durch Ablängen Einzelplatten erzeugt werden.

11. Verbundplatte aus einer Holzwerkstoffplatte (3) als Mittellage und zwei Schichtstoffplatten als Decklagen, wobei jede Decklage (4a,4c) eine Mehrzahl von mit einer Imprägnierung versehenen Zellulosefaserbahnen umfasst, wobei die verschiedenen Lagen ohne mechanische Befestigungsmittel und/oder Klebemittel miteinander verbunden sind, **dadurch gekennzeichnet, dass** die obere und/oder untere Decklage (4a,4c) eine Dicke von zumindest 2 mm und/oder die Dicke der Mittellage (4b) höchstens um den Faktor 5 größer als die Dicke der oberen Decklage (4a) oder der unteren Decklage (4c) ist, und/oder die obere und/oder untere Decklage (4a,4c) so gebildet ist, dass sie aus mindestens 12 Zellulosefaserbahnen in der jeweiligen Decklage besteht.

12. Verbundplatte aus einer Holzwerkstoffplatte (3) als Mittellage und zwei Schichtstoffplatten als Decklagen, wobei jede Decklage (4a,4c) eine Mehrzahl von mit einer Imprägnierung versehenen Zellulosefaserbahnen umfasst, wobei die Decklagen (4a,4c) mit der Holzwerkstoffplatte (3) als Mittellage (4b) direkt miteinander verpreßt sind, **dadurch gekennzeichnet, dass** die obere und/oder untere Decklage (4a,4c) eine Dicke von zumindest 2 mm und/oder die Dicke der Mittellage (4b) höchstens um den Faktor 5 größer als die Dicke der oberen Decklage (4a) oder der unteren Decklage (4c) ist, und/oder die obere und/oder untere Decklage (4a,4c) so gebildet ist, dass sie aus mindestens 12 Zellulosefaserbahnen in der jeweiligen Decklage besteht.

13. Verbundplatte nach Anspruch 11 oder 12, **dadurch gekennzeichnet, dass** die Decklagen (4a,4c) eine Dicke von mindestens 3 mm, bevorzugt mindestens 4 mm, aufweisen oder aus mindestens 18, bevorzugt mindestens 24 Zellulosefaserbahnen, in der jeweiligen Decklage bestehen.

14. Verbundplatte nach Anspruch 11 oder 12, **dadurch gekennzeichnet, dass** die Dicke der Mittellage (4b) höchstens um den Faktor 4, besonders bevorzugt höchstens um den Faktor 3, größer als die Dicke der oberen Decklage (4a) oder der unteren Decklage (4c) ist.

15. Verbundplatte nach einem der Ansprüche 11 bis 14, **dadurch gekennzeichnet, dass** die obere Decklage (4a) und/oder die untere Decklage (4c) an ihrer von der Mittellage (4b) abgewandten Seite mit einem Dekor und/oder mit einer Verschleißschutzschicht (4d), die insbesondere Hartpartikel aufweist und vorzugweise eine aus einem Overlaypapier gebildete Zellulosefaserbahn ist, versehen ist.

16. Verbundplatte nach einem der Ansprüche 11 bis 15, **dadurch gekennzeichnet, dass** die Verbundplatte (6) beschichtet ist, wobei die Beschichtung durch einen Lack, eine Pulverbeschichtung oder durch ein Dekormaterial, insbesondere ein Holz- oder Steinfurnier, eine Dekor- oder Metallfolie oder einen Schichtstoff, und/oder durch ein Verpressen mit einem imprägnierten, insbesondere mit Melaminharz imprägnierten Dekorpapier gebildet ist.

17. Verbundplatte nach einem der Ansprüche 11 bis 16, **dadurch gekennzeichnet, dass** die Dicke der oberen Decklage (4a) größer als die Dicke der unteren Decklage (4c) ist.

18. Verbundplatte nach einem der Ansprüche 11 bis 17, **dadurch gekennzeichnet, dass** die Verbundplatte (6) eine Biegefestigkeit in Querrichtung von mindestens 30 N/mm², bevorzugt mindestens 50 N/mm², besonders bevorzugt mindestens 80 N/mm², und/oder einen Biegeelastizitätsmodul in Querrichtung von mindestens 3000 N/mm², bevorzugt mindestens 5000 N/mm², besonders bevorzugt mindestens 7500 N/mm², aufweist.

## Claims

1. A method for the manufacture of a laminated composite panel, in which the following steps are executed:
- preparation of a multiplicity of first cellulose fibre webs (1a, 1b, 1c, 1d) provided with an impregnation,
- preparation of a multiplicity of second cellulose fibre webs (2a, 2b, 2c, 2d) provided with an impregnation,
- preparation of a wood based material panel (3),
- formation of a lamination (4) with an upper covering layer (4a) containing the first cellulose fibre webs (1a, 1b, 1c, 1d), with a central layer (4b), the upper face (4b.1) of which is adjacent to the upper covering layer (4a), containing the wood based material panel (3), and with a lower covering layer (4c), adjacent to the lower face (4b.2) of the central layer (4b), containing the second cellulose fibre webs (2a, 2b, 2c, 2d), wherein the upper covering layer (4a) and/or the lower covering layer (4c) is formed such that after the step of removal from the hot press (5) it has a thickness of at least 2 mm,
- introduction of the lamination (4) into a hot press (5),
- compression of the lamination (4) with increasing pressure and temperature to form a composite panel (6), and
- removal of the composite panel (6) from the hot press (5).

2. A method for the manufacture of a laminated composite panel, in particular according to Claim 1, in which the following steps are executed:
- preparation of a multiplicity of first cellulose fibre webs (1a, 1b, 1c, 1d) provided with an impregnation,
- preparation of a multiplicity of second cellulose fibre webs (2a, 2b, 2c, 2d) provided with an impregnation,
- preparation of a wood based material panel (3),
- formation of a lamination (4) with an upper covering layer (4a) containing the first cellulose fibre webs (1a, 1b, 1c, 1d), with a central layer (4b), the upper face (4b.1) of which is adjacent to the upper covering layer (4a), containing the wood based material panel (3) and with a lower covering layer (4c), adjacent to the lower face (4b.2) of the central layer (4b), containing the second cellulose fibre webs (2a, 2b, 2c, 2d), wherein the thickness of the wood based material panel (3) is selected such that after the step of removal from the hot press (5) it has a thickness that is greater by a maximum factor of 5 than the thickness of the upper covering layer (4a) or the lower covering layer (4c),
- introduction of the lamination (4) into a hot press (5),
- compression of the lamination (4) with increasing pressure and temperature to form a composite panel (6), and
- removal of the composite panel (6) from the hot press (5).

3. A method for the manufacture of a laminated composite panel, in particular according to Claim 1 or 2, in which the following steps are executed:
- preparation of a multiplicity of first cellulose fibre webs (1a, 1b, 1c, 1d) provided with an impregnation,
- preparation of a multiplicity of second cellulose fibre webs (2a, 2b, 2c, 2d) provided with an impregnation,
- preparation of a wood based material panel (3),
- formation of a lamination (4) with an upper covering layer (4a) containing the first cellulose fibre webs (1a, 1b, 1c, 1d), with a central layer (4b), the upper face (4b.1) of which is adjacent to the upper covering layer (4a), containing the wood based material panel (3) and with a lower covering layer (4c), adjacent to the lower face (4b.2) of the central layer (4b), containing the second cellulose fibre webs (2a, 2b, 2c, 2d), wherein the upper covering layer (4a) and/or lower covering layer (4c) is formed such that the number of cellulose fibre webs in each case is at least 12 in the respective covering layer,
- introduction of the lamination (4) into a hot press (5),
- compression of the lamination (4) with increasing pressure and temperature to form a composite panel (6), and
- removal of the composite panel (6) from the hot press (5).

4. The method according to one of the preceding claims, **characterised in that** in the step of the formation of a lamination (4) the upper covering layer (4a) and/or the lower covering layer (4c) on its face facing away from the central layer (4b) is provided with a cellulose fibre web (1a) forming a decorative paper and/or with a wear protective layer (4d), which in particular has hard particles and is preferably a cellulose fibre web forming an overlay paper.

5. The method according to one of the preceding claims, **characterised in that** the upper covering layer (4a) and/or the lower covering layer (4c) is formed such that after the step of removal from the hot press (5) it has a thickness of at least 3 mm, preferably at least 4 mm, and/or such that the number of cellulose fibre webs in the respective covering layer is in each case at least 18, preferably at least 24.

6. The method according to one of the preceding claims, **characterised in that** the thickness of the wood based material panel (3) is selected such that after the step of removal from the hot press (5) it has a thickness that is greater than the thickness of the upper covering layer (4a) or the lower covering layer (4c) by a maximum factor of 4, preferably by a maximum factor of 3.

7. The method according to one of the preceding claims, **characterised in that** in the compression step the maximum temperature of the hot press (5) is at least 130°C, preferably at least 140°C, particularly preferably at least 150°C, and/or the maximum temperature of the composite panel (6) is at least 120°C, preferably at least 130°C, particularly preferably at least 140°C, and/or the maximum pressure is at least 15 MPa, preferably at least 19 MPa, particularly preferably at least 23 MPa.

8. The method according to one of the preceding claims, **characterised in that** one or a plurality of the cellulose fibre webs (1a, 1b, 1c, 1d, 2a, 2b, 2c, 2d) is provided with an impregnation, which contains conducting additives, in particular salts of organic acids, preferably metal salts.

9. The method according to one of the preceding claims, **characterised in that** before the compression step a layer that is permeable to water vapour, in particular a fleece or a film, is provided adjacent to one or both faces of the lamination (4), and which is removed from the composite panel (6) after the compression step.

10. The method according to one of the preceding claims, **characterised in that** the hot press (5) is a continuously working press, in particular a double belt press, which in particular has a press length of at least 10 m, preferably of at least 20 m, particularly preferably of at least 25 m, and/or the composite panel (6) exiting the hot press (5) is a continuous length panel, from which individual panels are generated by being cut to length.

11. A composite panel made from a wood based material panel (3) as a central layer and two laminated panels as covering layers, wherein each covering layer (4a, 4c) comprises a multiplicity of cellulose fibre webs provided with an impregnation, wherein the various layers are connected with one another without mechanical means of attachment and/or means of adhesion, **characterised in that** the upper and/or lower covering layer (4a, 4c) has a thickness of at least 2 mm, and/or the thickness of the central layer (4b) is greater than the thickness of the upper covering layer (4a) or the lower covering layer (4c) by a maximum factor of 5, and/or the upper and/or lower covering layer (4a, 4c) is formed such that it consists of at least 12 cellulose fibre webs in the respective covering layer.

12. A composite panel made from a wood based material panel (3) as a central layer and two laminated panels as covering layers, wherein each covering layer (4a, 4c) comprises a multiplicity of cellulose fibre webs provided with an impregnation, wherein the covering layers (4a, 4c) together with the wood based material panel (3) as a central layer (4b) are directly pressed together, **characterised in that** the upper and/or lower covering layer (4a, 4c) has a thickness of at least 2 mm, and/or the thickness of the central layer (4b) is greater than the thickness of the upper covering layer (4a) or the lower covering layer (4c) by a maximum factor of 5, and/or the upper and/or lower covering layer (4a, 4c) is formed such that it consists of at least 12 cellulose fibre webs in the respective covering layer.

13. The composite panel according to Claim 11 or 12, **characterised in that** the covering layers (4a, 4c) have a thickness of at least 3 mm, preferably of at least 4 mm, or consist of at least 18, preferably of at least 24, cellulose fibre webs in the respective covering layer.

14. The composite panel according to Claim 11 or 12, **characterised in that** the thickness of the central layer (4b) is greater than the thickness of the upper covering layer (4a) or the lower covering layer (4c) by a maximum factor of 4, particularly preferably by a maximum factor of 3.

15. The composite panel according to one of the Claims 11 to 14, **characterised in that** the upper covering layer (4a) and/or the lower covering layer (4c) is provided on its face facing away from the central layer (4b) with a decoration and/or with a wear protection layer (4d), which in particular has hard particles and preferably is a cellulose fibre web formed from an overlay paper.

16. The composite panel according to one of the Claims 11 to 15, **characterised in that** the composite panel (6) is coated, wherein the coating is formed from a paint, a powder coating, or by means of a decorative material, in particular a wood or stone veneer, a decorative film, or a metal film, or a laminate, and/or by compression with an impregnated decorative paper, in particular with a melamine resin impregnated decorative paper.

17. The composite panel according to one of the Claims 11 to 16, **characterised in that** the thickness of the upper covering layer (4a) is greater than the thickness of the lower covering layer (4c).

18. The composite panel according to one of the Claims 11 to 17, **characterised in that** the composite panel (6) has a bending strength in the transverse direction of at least 30 N/mm², preferably of at least 50 N/mm², particularly preferably of at least 80 N/mm², and/or a bending elasticity modulus in the transverse direction of at least 3000 N/mm², preferably of at least 5000 N/mm², particularly preferably of at least 7500 N/mm².

## Revendications

1. Procédé de fabrication d'un panneau composite stratifié, dans lequel sont réalisées les étapes suivantes:
- procurer une pluralité de premières bandes fibreuses cellulosiques pourvues d'une imprégnation (1a, 1b, 1c, 1d),
- procurer une pluralité de secondes bandes fibreuses cellulosiques pourvues d'une imprégnation (2a, 2b, 2c, 2d),
- procurer un produit dérivé du bois en forme de plaque (3),
- constituer une disposition par couches (4) avec une couche de couverture supérieure (4a) contenant les premières bandes fibreuses cellulosiques (1a, 1b, 1c, 1d), avec une couche médiane (4b) contiguë à la couche de couverture supérieure (4a) par sa face supérieure (4b.1) et contenant le produit dérivé du bois en forme de plaque (3) et avec une couche de couverture inférieure (4c) contiguë à la couche médiane (4b) par sa face inférieure (4b.2) et contenant les secondes bandes fibreuses cellulosiques (2a, 2b, 2c, 2d), la couche de couverture supérieure (4a) et/ou la couche de couverture inférieure (4c) étant constituées de manière à présenter, après l'étape de sortie de la presse à chaud (5), une épaisseur d'au moins 2 mm,
- introduire la disposition par couches (4) dans une presse à chaud (5),
- presser la disposition par couches (4) en augmentant la force de compression et la température pour obtenir un panneau composite (6),
- extraire de la plaque composite (6) de la presse à chaud (5).

2. Procédé de fabrication d'un panneau composite stratifié, en particulier selon la revendication 1, dans lequel sont réalisées les étapes suivantes:
- procurer une pluralité de premières bandes fibreuses cellulosiques pourvues d'une imprégnation (1a, 1b, 1c, 1d),
- procurer une pluralité de secondes bandes fibreuses cellulosiques pourvues d'une imprégnation (2a, 2b, 2c, 2d),
- procurer un produit dérivé du bois en forme de plaque (3),
- constituer une disposition par couches (4) avec une couche de couverture supérieure (4a) contenant les premières bandes fibreuses cellulosiques (1a, 1b, 1c, 1d), avec une couche médiane (4b) contiguë à la couche de couverture supérieure (4a) par sa face supérieure (4b.1) et contenant le produit dérivé du bois en forme de plaque (3) et avec une couche de couverture inférieure (4c) contiguë à la couche médiane (4b) par sa face inférieure (4b.2) et contenant les secondes bandes fibreuses cellulosiques (2a, 2b, 2c, 2d), l'épaisseur du produit dérivé du bois en forme de plaque (3) étant choisie de manière à avoir, après l'étape de sortie de la presse à chaud (5) une épaisseur qui soit supérieure au plus d'un facteur 5 à l'épaisseur de la couche de couverture supérieure (4a) ou de la couche de couverture inférieure (4c),
- introduire la disposition par couches (4) dans une presse à chaud (5),
- presser la disposition par couches (4) en augmentant la force de compression et la température pour obtenir une plaque composite (6) et
- extraire la plaque composite (6) de la presse à chaud (5).

3. Procédé de fabrication d'un panneau composite stratifié, en particulier selon la revendication 1 ou 2, dans lequel sont réalisées les étapes suivantes:
- procurer une pluralité de premières bandes fibreuses cellulosiques pourvues d'une imprégnation (1a, 1b, 1c, 1d),
- procurer une pluralité de secondes bandes fibreuses cellulosiques pourvues d'une imprégnation (2a, 2b, 2c, 2d),
- procurer un produit dérivé du bois en forme de plaque (3),
- constituer une disposition par couches (4) avec une couche de couverture supérieure (4a) contenant les premières bandes fibreuses cellulosiques (1a, 1b, 1c, 1d), avec une couche médiane (4b) contiguë à la couche de couverture supérieure (4a) par sa face supérieure (4b.1) et contenant le produit dérivé du bois en forme de plaque(3) et avec une couche de couverture inférieure (4c) contiguë à la couche médiane (4b) par sa face inférieure (4b.2) et contenant les secondes bandes fibreuses cellulosiques (2a, 2b, 2c, 2d), la couche de couverture supérieure (4a) et/ou la couche de couverture inférieure (4c) étant constituées de manière à ce que le nombre de bandes fibreuses cellulosiques s'élève respectivement à au moins 12 dans la couche de couverture respective,
- introduire la disposition par couches (4) dans une presse à chaud (5),
- presser la disposition par couches (4) en augmentant la force de compression et la température pour obtenir une plaque composite (6) et
- extraire la plaque composite (6) de la presse à chaud (5).

4. Procédé selon une des revendications précédentes, **caractérisé en ce que**, dans l'étape de constitution d'une disposition par couches (4), la couche de couverture supérieure (4a) et/ou la couche de couverture inférieure (4c) est pourvue, sur sa face détournée de la couche médiane (4b), d'une bande fibreuse cellulosique (1a) formant un papier décor et/ou d'une couche anti-usure (4d) qui présente en particulier des particules dures et est de préférence une bande fibreuse cellulosique formant un papier de recouvrement.

5. Procédé selon une des revendications précédentes, **caractérisé en ce que** la couche de couverture supérieure (4a) et/ou la couche de couverture inférieure (4c) est constituée de manière à présenter, après l'étape de sortie de la presse à chaud (5), une épaisseur d'au moins 3 mm, de préférence au moins 4 mm, et/ou à présenter un nombre de bandes fibreuses cellulosiques respectivement d'au moins 18, de préférence d'au moins 24, dans la couche de couverture respective.

6. Procédé selon une des revendications précédentes, **caractérisé en ce que** l'épaisseur du produit dérivé du bois en forme de plaque (3) est choisie de manière à ce qu'il ait, après l'étape de sortie de la presse à chaud (5), une épaisseur qui soit supérieure au plus d'un facteur 4, de préférence au plus d'un facteur 3, à l'épaisseur de la couche de couverture supérieure (4a) ou de la couche de couverture inférieure (4c).

7. Procédé selon une des revendications précédentes, **caractérisé en ce que**, dans l'étape de pressage, la température maximale de la presse à chaud (5) s'élève à au moins 130 °C, de préférence au moins 140 °C, de manière particulièrement préférentiellement au moins 150 °C, et/ou la température maximale du panneau composite (6) à au moins 120 °C, de préférence au moins 130 °C, de manière particulièrement préférentiellement au moins 140 °C, et/ou la force de compression maximale à au moins 15 MPa, de préférence au moins 19 MPa, de manière particulièrement préférentiellement au moins 23 MPa.

8. Procédé selon une des revendications précédentes, **caractérisé en ce qu'**une ou plusieurs des bandes fibreuses cellulosiques (1a, 1b, 1c, 1d, 2a, 2b, 2c, 2d) sont pourvues d'une imprégnation qui contient des additifs conducteurs électriques, en particulier des sels d'acides organiques, de préférence des sels métalliques.

9. Procédé selon une des revendications précédentes, **caractérisé en ce que**, avant l'étape de pressage, une couche perméable à la vapeur d'eau, en particulier un non-tissé ou un film, est prévue adjacente à une ou les deux faces de la disposition par couches (4) et est enlevée après l'étape de pressage du panneau composite (6).

10. Procédé selon une des revendications précédentes, **caractérisé en ce que** la presse à chaud (5) est une presse fonctionnant en continu, en particulier une presse à double bande, qui présente en particulier une longueur de presse d'au moins 10 m, de préférence au moins 20 m, de manière particulièrement préférentiellement au moins 25 m, et/ou que le panneau composite (6) sortant de la presse à chaud (5) est un panneau réalisé en continu à partir duquel des panneaux individuels sont fabriqués par sectionnement.

11. Panneau composite fait d'un produit dérivé du bois en forme de plaque (3) faisant office de couche médiane et de deux panneaux en matériau stratifié faisant office de couches de couverture, chaque couche de couverture (4a, 4c) comprenant une pluralité de bandes fibreuses cellulosiques pourvues d'une imprégnation, les diverses couches étant reliées sans moyens de fixation mécaniques et/ou colle, **caractérisé en ce que** la couche de couverture supérieure et/ou inférieure (4a, 4c) a une épaisseur d'au moins 2 mm et/ou que l'épaisseur de la couche médiane (4b) est supérieure au plus d'un facteur 5 à l'épaisseur de la couche de couverture supérieure (4a) ou de la couche de couverture inférieure (4c) et/ou que la couche de couverture supérieure et/ou inférieure (4a, 4c) est constituée de manière à ce qu'elle soit composée d'au moins 12 bandes fibreuses cellulosiques dans la couche de couverture respective.

12. Panneau composite fait d'un produit dérivé du bois en forme de plaque (3) faisant office de couche médiane et de deux panneaux en matériau stratifié faisant office de couches de couverture, chaque couche de couverture (4a, 4c) présentant une pluralité de bandes fibreuses cellulosiques, les couches de couverture (4a, 4c) étant pressées directement les unes avec les autres avec le produit dérivé du bois en forme de plaque (3) faisant office de couche médiane (4b), **caractérisé en ce que** la couche de couverture supérieure et/ou inférieure (4a, 4c) a une épaisseur d'au moins 2 mm et/ou que l'épaisseur de la couche médiane (4b) est supérieure au plus d'un facteur 5 à l'épaisseur de la couche de couverture supérieure (4a) ou de la couche de couverture inférieure (4c) et/ou que la couche de couverture supérieure et/ou inférieure (4a, 4c) est constituée de manière à ce qu'elle soit composée d'au moins 12 bandes fibreuses cellulosiques dans la couche de couverture respective.

13. Panneau composite selon la revendication 11 ou 12, **caractérisé en ce que** les couches de couverture (4a, 4c) ont une épaisseur d'au moins 3 mm, de préférence au moins 4 mm, ou sont composées d'au moins 18, de préférence au moins 24, bandes fibreuses cellulosiques dans la couche de couverture respective.

14. Panneau composite selon la revendication 11 ou 12, **caractérisé en ce que** l'épaisseur de la couche médiane (4b) est supérieure au plus d'un facteur 4, de manière particulièrement préférentielle au plus d'un facteur 3, à l'épaisseur de la couche de couverture supérieure (4a) ou de la couche de couverture inférieure (4c).

15. Panneau composite selon une des revendications 11 à 14, **caractérisé en ce que** la couche de couverture supérieure (4a) et/ou la couche de couverture inférieure (4c) est pourvue sur sa face détournée de la couche médiane (4b) d'un décor et/ou d'une couche anti-usure (4d) qui présente en particulier des particules dures et est de préférence une bande fibreuse cellulosique formée d'un papier de recouvrement.

16. Panneau composite selon une des revendications 11 à 15, **caractérisé en ce que** le panneau composite (6) est revêtu, le revêtement étant constitué par une peinture, un revêtement poudreux ou par un matériau décor, en particulier un placage de bois ou de pierre, un film décor ou métallique ou une disposition par couches et/ou par compression avec un papier décor imprégné, en particulier imprégné de résine de mélamine.

17. Panneau composite selon une des revendications 11 à 16, **caractérisé en ce que** l'épaisseur de la couche de couverture supérieure (4a) est supérieure à l'épaisseur de la couche de couverture inférieure (4c).

18. Panneau composite selon une des revendications 11 à 17, **caractérisé en ce que** le panneau composite (6) présente une résistance à la flexion dans le sens transversal d'au moins 30 N/mm², de préférence d'au moins 50 N/mm², de manière particulièrement préférentielle d'au moins 80 N/mm², et/ou un module d'élasticité en flexion dans le sens transversal d'au moins 3000 N/mm², de préférence d'au moins 5000 N/mm², de manière particulièrement préférentielle d'au moins 7500 N/mm².
